# EUROPEAN PATENT SPECIFICATION

(11) **EP 3 125 525 B1**
(45) Date of publication and mention of the grant of the patent: **03.08.2022**
(21) Application number: 14886763.3
(22) Date of filing: 04.06.2014
(51) Int. Cl.: H04N 5/232

(54) **METHOD AND SYSTEM FOR ENABLING CAMERA OF MOBILE TERMINAL TO AUTOMATICALLY ADAPT TO SCENE**
VERFAHREN UND SYSTEM FÜR EINE KAMERA EINES MOBILEN ENDGERÄTS ZUR AUTOMATISCHEN ANPASSUNG AN EINE SZENE
PROCÉDÉ ET SYSTÈME PERMETTANT À UNE CAMÉRA DE TERMINAL MOBILE DE S'ADAPTER AUTOMATIQUEMENT À UNE SCÈNE

(30) Priority: 26.03.2014 CN 201410115692
(43) Date of publication of application: 01.02.2017
(73) Proprietor: Huizhou TCL Mobile Communication Co., Ltd., Huizhou, Guangdong 516006 (CN)
(72) Inventor: WANG, Yunhui, Huizhou, Guangdong 516006 (CN)
(74) Representative: Murgitroyd & Company
(86) International application number: PCT/CN2014/079130
(87) International publication number: WO 2015/143779

(56) References cited:
- CN-A- 101 193 206
- CN-A- 101 867 717
- CN-A- 103 079 013
- CN-A- 103 500 047
- JP-A- 2013 141 155
- US-A1- 2006 170 816
- US-A1- 2007 013 782
- US-A1- 2011 187 815
- US-A1- 2012 019 687
- US-A1- 2012 062 779
- US-A1- 2013 242 120

## Description

The present invention relates to the field of mobile terminal software, and in particular relates to a method and a system for a mobile terminal camera to automatically adapt to scenarios.

Right now, smart phones are developing rapidly. It is also the most popular and common function to use a mobile terminal, such as a cell phone, to take pictures, and cell phones have increasingly powerful camera functions, some cell phones even have camera capabilities as good as those of professional card cameras. There may be a variety of scenarios where a user uses a camera, for example, indoor, outdoor, moving, still, etc. Different camera parameters are required for different scenarios. However, existing mobile terminal cameras are unable to achieve the function of self-adaptation to scenarios. As a result, a user needs to make manual adjustments, leading to very inconvenient operations.

Therefore, the prior art is still in need of improvement and development.

US2013/0242120A1 discloses a mobile device which uses motion data data from an accelerometer to determine a user context, such as a motion state of the user, based on a pattern recognition of a periodic signature of the motion data, and to adjust at least one camera feature based on the user context. The user context may include, e.g., at least one of panning, walking, standing, sitting, and traveling in a moving vehicle.

US2012/0062779A1 discloses an image capturing device using motion data from a triaxial acceleration sensor to determine a state among a stop state, walking, running, traveling by bicycle, car or train, based on cyclic change pattern and an acceleration peak value of the motion data.

The object of the present invention is to provide a method and a system for a mobile terminal camera to automatically adapt to scenarios.

The invention is defined by the independent claims. Further embodiments result from the depending claims.

Advantageous effects: the present invention collects motion data of a mobile terminal within a predetermined period of time via a sensor, acquires the number of times when the maximum value of the motion data exceeds a predetermined value, obtains the current motion scenario of the user through analysis according to the number of times, and achieves adjustments of camera operation parameters, making it unnecessary for a user to conduct frequent operations while the user can conveniently and rapidly take pictures or videos in agreement with the current environment.

The aforementioned characteristics, features and advantages of the invention as well as the way they are achieved will be further illustrated in connection with the following examples and considerations as discussed in view of the figures.
- Fig.1: is a flow chart of a preferred embodiment of the method for a mobile terminal camera to automatically adapt to scenarios according to the present invention.
- Fig.2: is a specific flow chart of Step S103 in the method illustrated in Fig.1 according to the present invention.
- Fig.3: is a structural block diagram of a preferred embodiment of the system for a mobile terminal camera to automatically adapt to scenarios according to the present invention.

The present invention provides a method and a system for a mobile terminal camera to automatically adapt to scenarios. To make the object, technical solution and effect of the present invention clearer and more specific, the present invention will be further described in detail below. It should be understood that the specific embodiments herein are only used to describe the present invention, rather than to limit the present invention.

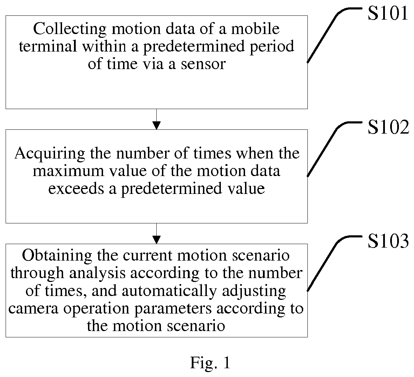

Please refer to Fig.1, and Fig.1 is a flow chart of a preferred embodiment of the method for a mobile terminal camera to automatically adapt to scenarios according to the present invention. As shown in the figure, it comprises steps of:
S101. Collecting motion data of a mobile terminal within a predetermined period of time via a sensor;
S102. Acquiring the number of times when the maximum value of the motion data exceeds a predetermined value;
S103. Obtaining the current motion scenario through analysis according to the number of times, and automatically adjusting camera operation parameters according to the motion scenario.

In the present embodiment, a sensor collects motion data of a mobile terminal first, said motion data depending on the type of the sensor, for example, if the type of the sensor is an acceleration sensor, then the motion data is an acceleration value. In the present invention, the sensor is an acceleration sensor, and with the acceleration sensor, the acceleration value of the mobile terminal can be detected, while the acceleration value can reflect the current motion state of the mobile terminal, when a person is in the walking state, a data wave diagram is collected through the mobile terminal, the data wave diagram is collected through a typical acceleration sensor with the X-axis representing time and the Y-axis representing acceleration value, and in the data wave diagram, the acceleration value shows a trend of steady change. Therefore, the current motion state of a mobile terminal can be reached backwardly according to the rule of acceleration value change.

Furthermore, the current motion scenario of the mobile terminal can be obtained through analysis according to the number of times when the maximum acceleration value exceeds a predetermined value, as the swinging magnitude of the mobile terminal is different in different motion scenarios, based on which the current motion scenario of the mobile terminal can be obtained through analysis and then the operation parameters can be automatically adjusted according to the motion scenario.

As a more preferred embodiment of the present invention, it further comprises prior to Step S101:
Presetting corresponding relations between all motion scenarios and camera operation parameters, said motion scenarios including walking mode, bike mode, automobile mode, leaning mode and still mode.

The present embodiment presets corresponding relations between all motion scenarios and camera operation parameters, one motion scenario corresponds to a set of camera operation parameters, and in such a way, when the mobile terminal is in a motion scenario, corresponding camera operation parameters can be called such that the mobile terminal camera works under the optimal environment and parameters and takes better pictures or videos. The motion scenarios provided in the present embodiment include walking mode, bike mode, automobile mode, leaning mode and still mode, the walking mode corresponds to a walking scenario, the bike mode corresponds to a bike scenario, and so on and so forth, wherein the leaning mode is an unsteady state between stillness and lifting. According to a user's need, a variety of modes can certainly be further defined so as to meet more specific and actual needs. For example, the walking mode can be further specifically classified into fast walking and slow walking modes, etc.

In summary, as a more preferred embodiment of the present invention, Step S103 further comprises:
Adjusting current camera operation parameters to operation parameters corresponding to the current mode of the mobile terminal according to the current mode of the mobile terminal obtained through analysis and preset corresponding relations between all motion scenarios and camera operation parameters.

The maximum values of acceleration collected by an acceleration sensor are different in different motion states. For example, during walking, the maximum value of acceleration is relatively high, and when riding an automobile, the maximum value of acceleration is relatively low. As a result, the motion scenario of a mobile terminal can be accurately obtained through analysis according to the number of times when the maximum value exceeds different threshold values. As a more preferred embodiment of the present invention, the predetermined value comprises a first threshold value, a second threshold value, a third threshold value, and a fourth threshold value, the fourth threshold value > the third threshold value > the second threshold value > the first threshold value, and Step S102 specifically comprises:
Acquiring the number of times when the maximum value of the motion data is between the first threshold value and the second threshold value, between the second threshold value and the third threshold value, between the third threshold value and the fourth threshold value, and greater than the fourth threshold value.

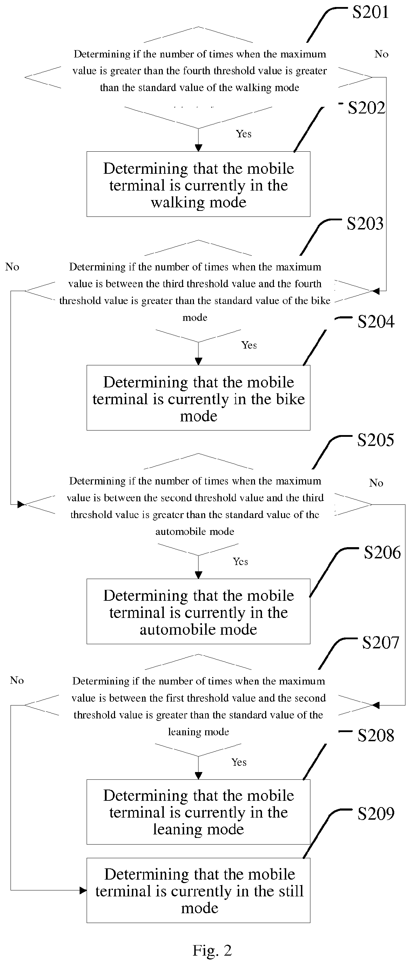

As a more preferred embodiment of the present invention, as shown in Fig.2, Step S103 specifically comprises:
S201. Determining if the number of times when the maximum value is greater than the fourth threshold value is greater than the standard value of the walking mode, if yes, go to Step S202, and if no, go to Step S203;
S202. Determining that the mobile terminal is currently in the walking mode;
S203. Determining if the number of times when the maximum value is between the third threshold value and the fourth threshold value is greater than the standard value of the bike mode, if yes, go to Step S204, and if no, go to Step S205;
S204. Determining that the mobile terminal is currently in the bike mode;
S205. Determining if the number of times when the maximum value is between the second threshold value and the third threshold value is greater than the standard value of the automobile mode, if yes, go to Step S206, and if no, go to Step S207;
S206. Determining that the mobile terminal is currently in the automobile mode;
S207. Determining if the number of times when the maximum value is between the first threshold value and the second threshold value is greater than the standard value of the leaning mode, if yes, go to Step S208, and if no, go to Step S209;
S208. Determining that the mobile terminal is currently in the leaning mode;
S209. Determining that the mobile terminal is currently in the still mode;

Wherein the standard value of the walking mode, the standard value of the bike mode, the standard value of the automobile mode and the standard value of the leaning mode are used to determine threshold values of the walking mode, the bike mode, the automobile mode and the leaning mode, respectively.

The above embodiments are specifically set up for the above motion scenarios, the first threshold value, the second threshold value, the third threshold value, and the fourth threshold value are used to determine threshold values of the modes, respectively. For example, in the walking mode, only when the maximum value is greater than the fourth threshold value can it be possible to determine that it is currently in the walking mode, while the corresponding standard value of the walking mode refers to the threshold value for determining the number of times of the walking mode. For example, when the number of times when the maximum value is greater than the fourth threshold value is greater than the standard value of the walking mode, it can be determined that the mobile terminal is currently in the walking mode, and so on and so forth.

Specifically, first, determining if the number of times when the maximum value is greater than the fourth threshold value is greater than the standard value of the walking mode, if yes, it indicates that the determination criterion of the walking mode is met, and at this moment, the number of times of a high acceleration value is relatively high, and it can be determined that the mobile terminal is in the walking mode, if no, further determining if the number of times when the maximum value is between the third threshold value and the fourth threshold value is greater than the standard value of the bike mode; when the maximum value is between the third threshold value and the fourth threshold value is greater than the standard value of the bike mode, it can be determined that the mobile terminal is in the bike mode, if no, further determining if the number of times when the maximum value is between the second threshold value and the third threshold value is greater than the standard value of the automobile mode; when the number of times when the maximum value is between the second threshold value and the third threshold value is greater than the standard value of the automobile mode, it can be determined that the mobile terminal is in the automobile mode, if no, further determining if the number of times when the maximum value is between the first threshold value and the second threshold value is greater than the standard value of the leaning mode; when the number of times when the maximum value is between the first threshold value and the second threshold value is greater than the standard value of the leaning mode, determining that the mobile terminal is currently in the leaning mode, if no, it indicates that the acceleration value is at a relatively low level, and therefore, it can be determined that the mobile terminal is currently in the still mode.

When the current mode of the mobile terminal is detected with the above method, the camera operation parameters can be adjusted to the optimal level if a user turns on the mobile terminal camera.

For example, on an existing smart phone such as an Android cell phone, the camera's user scenario comprises the following modes: portrait, scenery, sports, night, sunset, anti-shake, etc. When it is detected that a user is currently in the automobile mode, the camera can be adjusted to the sports mode, and the camera will automatically adjust operation parameters to the operation parameters of the sports mode; when it is detected that a user is currently in the still mode, the camera can exit the sports mode, and the camera operation parameters can be adjusted. Based on the above principle, the present invention can preset operation parameters corresponding to a plurality of motion scenarios in the mobile terminal system such that the camera has the optimal performance.

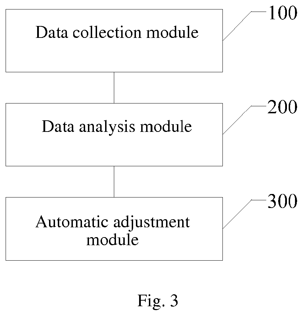

Based on the above method, the present invention further provides a system for a mobile terminal camera to automatically adapt to scenarios, as shown in Fig.3, comprising:
A data collection module 100 for collecting motion data of a mobile terminal within a predetermined period of time via a sensor;
A data analysis module 200 for acquiring the number of times when the maximum value of the motion data exceeds a predetermined value;
An automatic adjustment module 300 for obtaining the current motion scenario through analysis according to the number of times, and automatically adjusting camera operation parameters according to the motion scenario.

Furthermore, the system further comprises:
A presetting module for presetting corresponding relations between all motion scenarios and camera operation parameters, said motion scenarios including walking mode, bike mode, automobile mode, leaning mode and still mode.

Furthermore, the predetermined value comprises a first threshold value, a second threshold value, a third threshold value, and a fourth threshold value, the fourth threshold value > the third threshold value > the second threshold value > the first threshold value, and the data analysis module specifically comprises:
A count acquiring unit for acquiring the number of times when the maximum value of the motion data is between the first threshold value and the second threshold value, between the second threshold value and the third threshold value, between the third threshold value and the fourth threshold value, and greater than the fourth threshold value.

Furthermore, the automatic adjustment module comprises:
A first determining unit for determining if the number of times when the maximum value is greater than the fourth threshold value is greater than the standard value of the walking mode, if yes, determining that the mobile terminal is currently in the walking mode, and if no, go to the second determining unit;
A second determining unit for determining if the number of times when the maximum value is between the third threshold value and the fourth threshold value is greater than the standard value of the bike mode, if yes, determining that the mobile terminal is currently in the bike mode, and if no, go to the third determining unit;
A third determining unit for determining if the number of times when the maximum value is between the second threshold value and the third threshold value is greater than the standard value of the automobile mode, if yes, determining that the mobile terminal is currently in the automobile mode, and if no, go to the fourth determining unit;
A fourth determining unit for determining if the number of times when the maximum value is between the first threshold value and the second threshold value is greater than the standard value of the leaning mode, if yes, determining that the mobile terminal is currently in the leaning mode, and if no, determining that the mobile terminal is currently in the still mode;
Wherein the standard value of the walking mode, the standard value of the bike mode, the standard value of the automobile mode and the standard value of the leaning mode are used to determine threshold values of the walking mode, the bike mode, the automobile mode and the leaning mode, respectively.

Technical details regarding the above modules and units have been described in detail in the above method, which will not be repeated.

In summary, the present invention collects motion data of a mobile terminal within a predetermined period of time via a sensor, acquires the number of times when the maximum value of the motion data exceeds a predetermined value, obtains the current motion scenario of the user through analysis according to the number of times, and achieves adjustments of camera operation parameters, making it unnecessary for a user to conduct frequent operations while the user can conveniently and rapidly take pictures or videos in agreement with the current environment.

## Claims

1. A method for a mobile terminal camera to automatically adapt to scenarios comprising steps of:
A. Collecting acceleration values of a mobile terminal within a predetermined period of time via an acceleration sensor (S101);
B. Acquiring the number of times when a maximum value of the acceleration values exceeds at least one predetermined value (S102);
C. Obtaining the current motion scenario through analysis according to the number of times, and automatically adjusting camera operation parameters according to the motion scenario (S103);
wherein, prior to Step A, it further comprises:
A0. Presetting corresponding relations between all motion scenarios and camera operation parameters, said motion scenarios including a walking scenario, a bike scenario, an automobile scenario, a leaning scenario and a still scenario; and
wherein the at least one predetermined value comprises a first threshold value, a second threshold value, a third threshold value, and a fourth threshold value, the fourth threshold value > the third threshold value > the second threshold value > the first threshold value, and
wherein Step B specifically comprises:
- Acquiring the number of times when the maximum value of the motion data is between the first threshold value and the second threshold value, between the second threshold value and the third threshold value, between the third threshold value and the fourth threshold value, and greater than the fourth threshold value.

2. The method for a mobile terminal camera to automatically adapt to scenarios according the previous claim, wherein Step C specifically comprises:
C1. Determining if the number of times when the maximum value is greater than the fourth threshold value is greater than a standard value of the walking scenario (S201), if yes, determining that the mobile terminal is currently in the walking scenario (S202), and if no, go to Step C2;
C2. Determining if the number of times when the maximum value is between the third threshold value and the fourth threshold value is greater than a standard value of the bike scenario (S203), if yes, determining that the mobile terminal is currently in the bike scenario (S204), and if no, go to Step C3;
C3. Determining if the number of times when the maximum value is between the second threshold value and the third threshold value is greater than a standard value of the automobile scenario (S205), if yes, determining that the mobile terminal is currently in the automobile scenario (S206), and if no, go to Step C4;
C4. Determining if the number of times when the maximum value is between the first threshold value and the second threshold value is greater than a standard value of the leaning scenario (S207), if yes, determining that the mobile terminal is currently in the leaning scenario (S208), and if no, determining that the mobile terminal is currently in the still scenario (S209).

3. The method for a mobile terminal camera to automatically adapt to scenarios according to any of the preceding claims, wherein the camera further comprises: a portrait mode, a scenery mode, a sports mode, a night mode, a sunset mode and an anti-shake mode.

4. The method for a mobile terminal camera to automatically adapt to scenarios according to any of the preceding claims,
wherein Step C specifically comprises:
- Adjusting current camera operation parameters to operation parameters corresponding to the current operating mode of the mobile terminal according to the current motion scenario of the mobile terminal obtained through analysis and preset corresponding relations between all motion scenarios and camera operation parameters.

5. A system for a mobile terminal camera to automatically adapt to scenarios, the system comprising:
- A data collection module (100) for collecting acceleration values of a mobile terminal within a predetermined period of time via an acceleration sensor;
- A data analysis module (200) for acquiring the number of times when the maximum value of the acceleration values exceeds at least one predetermined value;
- An automatic adjustment module (300) for obtaining the current motion scenario through analysis according to the number of times, and automatically adjusting camera operation parameters according to the motion scenario
- A presetting module for presetting corresponding relations between all motion scenarios and camera operation parameters, said motion scenarios including a walking scenario, a bike scenario, an automobile scenario, a leaning scenario and a still scenario;
- wherein the at least one predetermined value comprises a first threshold value, a second threshold value, a third threshold value, and a fourth threshold value, the fourth threshold value > the third threshold value > the second threshold value > the first threshold value, and the data analysis module specifically comprises:
- A count acquiring unit for acquiring the number of times when the maximum value of the motion data is between the first threshold value and the second threshold value, between the second threshold value and the third threshold value, between the third threshold value and the fourth threshold value, and greater than the fourth threshold value.

6. The system for a mobile terminal camera to automatically adapt to scenarios according to claim 5, wherein the automatic adjustment module comprises:
- A first determining unit for determining if the number of times when the maximum value is greater than the fourth threshold value is greater than the standard value of the walking scenario, if yes, determining that the mobile terminal is currently in the walking scenario, and if no, go to the second determining unit;
- A second determining unit for determining if the number of times when the maximum value is between the third threshold value and the fourth threshold value is greater than the standard value of the bike scenario, if yes, determining that the mobile terminal is currently in the bike scenario, and if no, go to the third determining unit;
- A third determining unit for determining if the number of times when the maximum value is between the second threshold value and the third threshold value is greater than the standard value of the automobile scenario, if yes, determining that the mobile terminal is currently in the automobile scenario, and if no, go to the fourth determining unit;
- A fourth determining unit for determining if the number of times when the maximum value is between the first threshold value and the second threshold value is greater than the standard value of the leaning scenario, if yes, determining that the mobile terminal is currently in the leaning scenario, and if no, determining that the mobile terminal is currently in the still scenario.

## Patentansprüche

1. Ein Verfahren für das automatische Anpassen einer Kamera eines mobilen Endgeräts an Szenarien, beinhaltend die folgenden Schritte:
A. Sammeln von Beschleunigungswerten eines mobilen Endgeräts innerhalb eines vorgegebenen Zeitraums mittels eines Beschleunigungssensors (S101);
B. Erfassen der Anzahl Male, wenn ein maximaler Wert der Beschleunigungswerte mindestens einen vorgegebenen Wert überschreitet (S102);
C. Erhalten des aktuellen Bewegungsszenarios durch Analyse in Abhängigkeit von der Anzahl Male und automatisches Einstellen von Kamerabetriebsparametern in Abhängigkeit von dem Bewegungsszenario (S103);
wobei es vor Schritt A ferner Folgendes beinhaltet:
A0. Voreinstellen entsprechender Beziehungen zwischen allen Bewegungsszenarien und Kamerabetriebsparametern, wobei die Bewegungsszenarien ein Geh-Szenario, ein Zweirad-Szenario, ein Automobil-Szenario, ein Neigungsszenario und ein stilles Szenario umfassen; und
wobei der mindestens eine vorgegebene Wert einen ersten Schwellenwert, einen zweiten Schwellenwert, einen dritten Schwellenwert und einen vierten Schwellenwert beinhaltet, wobei der vierte Schwellenwert > der dritte Schwellenwert > der zweite Schwellenwert > der erste Schwellenwert ist, und
wobei Schritt B spezifisch Folgendes beinhaltet:
- Erfassen der Anzahl Male, wenn der maximale Wert der Bewegungsdaten zwischen dem ersten Schwellenwert und dem zweiten Schwellenwert liegt, zwischen dem zweiten Schwellenwert und dem dritten Schwellenwert liegt, zwischen dem dritten Schwellenwert und dem vierten Schwellenwert liegt und größer als der vierte Schwellenwert ist.

2. Verfahren für das automatische Anpassen einer Kamera eines mobilen Endgeräts an Szenarien gemäß dem vorhergehenden Anspruch, wobei Schritt C spezifisch Folgendes beinhaltet:
C1. Bestimmen, ob die Anzahl Male, wenn der maximale Wert größer als der vierte Schwellenwert ist, größer als ein Standardwert des Geh-Szenarios ist (S201), wenn ja, Bestimmen, dass sich das mobile Endgerät aktuell im Geh-Szenario befindet (S202), und wenn nein, zu Schritt C2 übergehen;
C2. Bestimmen, ob die Anzahl Male, wenn der maximale Wert zwischen dem dritten Schwellenwert und dem vierten Schwellenwert liegt, größer als ein Standardwert des Zweirad-Szenarios ist (S203), wenn ja, Bestimmen, dass sich das mobile Endgerät aktuell im Zweirad-Szenario befindet (S204), und wenn nein, zu Schritt C3 übergehen;
C3. Bestimmen, ob die Anzahl Male, wenn der maximale Wert zwischen dem zweiten Schwellenwert und dem dritten Schwellenwert liegt, größer als ein Standardwert des Automobil-Szenarios ist (S205), wenn ja, Bestimmen, dass sich das mobile Endgerät aktuell im Automobil-Szenario befindet (S206), und wenn nein, zu Schritt C4 übergehen;
C4. Bestimmen, ob die Anzahl Male, wenn der maximale Wert zwischen dem ersten Schwellenwert und dem zweiten Schwellenwert liegt, größer als ein Standardwert des Neigungsszenarios ist (S207), wenn ja, Bestimmen, dass sich das mobile Endgerät aktuell im Neigungsszenario befindet (S208), und wenn nein, Bestimmen, dass sich das mobile Endgerät aktuell im stillen Szenario befindet (S209).

3. Verfahren für das automatische Anpassen einer Kamera eines mobilen Endgeräts an Szenarien gemäß einem der vorhergehenden Ansprüche, wobei die Kamera ferner Folgendes beinhaltet: einen Porträtmodus, einen Landschaftsmodus, einen Sportmodus, einen Nachtmodus, einen Sonnenuntergangsmodus und einen Anti-Rüttel-Modus.

4. Verfahren für das automatische Anpassen einer Kamera eines mobilen Endgeräts an Szenarien gemäß einem der vorhergehenden Ansprüche,
wobei Schritt C spezifisch Folgendes beinhaltet:
- Einstellen aktueller Kamerabetriebsparameter auf Betriebsparameter, die dem aktuellen Betriebsmodus des mobilen Endgeräts entsprechen, in Abhängigkeit von dem durch Analyse erhaltenen aktuellen Bewegungsszenario des mobilen Endgeräts und voreingestellten entsprechenden Beziehungen zwischen allen Bewegungsszenarien und Kamerabetriebsparametern.

5. Ein System für das automatische Anpassen einer Kamera eines mobilen Endgeräts an Szenarien, wobei das System Folgendes beinhaltet:
- ein Datensammelmodul (100) zum Sammeln von Beschleunigungswerten eines mobilen Endgeräts innerhalb eines vorgegebenen Zeitraums mittels eines Beschleunigungssensors;
- ein Datenanalysemodul (200) zum Erfassen der Anzahl Male, wenn der maximale Wert der Beschleunigungswerte mindestens einen vorgegebenen Wert überschreitet;
- ein Modul (300) für die automatische Einstellung zum Erhalten des aktuellen Bewegungsszenarios durch Analyse in Abhängigkeit von der Anzahl Male und automatischem Einstellen von Kamerabetriebsparametern in Abhängigkeit von dem Bewegungsszenario;
- ein Voreinstellungsmodul zum Voreinstellen entsprechender Beziehungen zwischen allen Bewegungsszenarien und Kamerabetriebsparametern, wobei die Bewegungsszenarien ein Geh-Szenario, ein Zweirad-Szenario, ein Automobil-Szenario, ein Neigungsszenario und ein stilles Szenario umfassen;
- wobei der mindestens eine vorgegebene Wert einen ersten Schwellenwert, einen zweiten Schwellenwert, einen dritten Schwellenwert und einen vierten Schwellenwert beinhaltet, wobei der vierte Schwellenwert > der dritte Schwellenwert > der zweite Schwellenwert > der erste Schwellenwert ist, und das Datenanalysemodul spezifisch Folgendes beinhaltet:
- eine Zählungserfassungseinheit zum Erfassen der Anzahl Male, wenn der maximale Wert der Bewegungsdaten zwischen dem ersten Schwellenwert und dem zweiten Schwellenwert liegt, zwischen dem zweiten Schwellenwert und dem dritten Schwellenwert liegt, zwischen dem dritten Schwellenwert und dem vierten Schwellenwert liegt und größer als der vierte Schwellenwert ist.

6. System für das automatische Anpassen einer Kamera eines mobilen Endgeräts an Szenarien gemäß Anspruch 5, wobei das Modul für die automatische Einstellung Folgendes beinhaltet:
- eine erste Bestimmungseinheit zum Bestimmen, ob die Anzahl Male, wenn der maximale Wert größer als der vierte Schwellenwert ist, größer als der Standardwert des Geh-Szenarios ist, wenn ja, Bestimmen, dass sich das mobile Endgerät aktuell im Geh-Szenario befindet, und wenn nein, zu der zweiten Bestimmungseinheit übergehen;
- eine zweite Bestimmungseinheit zum Bestimmen, ob die Anzahl Male, wenn der maximale Wert zwischen dem dritten Schwellenwert und dem vierten Schwellenwert liegt, größer als der Standardwert des Zweirad-Szenarios ist, wenn ja, Bestimmen, dass sich das mobile Endgerät aktuell im Zweirad-Szenario befindet, und wenn nein, zu der dritten Bestimmungseinheit übergehen;
- eine dritte Bestimmungseinheit zum Bestimmen, ob die Anzahl Male, wenn der maximale Wert zwischen dem zweiten Schwellenwert und dem dritten Schwellenwert liegt, größer als der Standardwert des Automobil-Szenarios ist, wenn ja, Bestimmen, dass sich das mobile Endgerät aktuell im Automobil-Szenario befindet, und wenn nein, zu der vierten Bestimmungseinheit übergehen;
- eine vierte Bestimmungseinheit zum Bestimmen, ob die Anzahl Male, wenn der maximale Wert zwischen dem ersten Schwellenwert und dem zweiten Schwellenwert liegt, größer als der Standardwert des Neigungsszenarios ist, wenn ja, Bestimmen, dass sich das mobile Endgerät aktuell im Neigungsszenario befindet, und wenn nein, Bestimmen, dass sich das mobile Endgerät aktuell im stillen Szenario befindet.

## Revendications

1. Un procédé permettant à une caméra de terminal mobile de s'adapter automatiquement à des scénarios comprenant les étapes :
A. de collecte de valeurs d'accélération d'un terminal mobile dans les limites d'une période de temps prédéterminée par l'intermédiaire d'un capteur d'accélération (S101) ;
B. d'acquisition du nombre de fois où une valeur maximale des valeurs d'accélération dépasse au moins une valeur prédéterminée (S102) ;
C. d'obtention du scénario de mouvement actuel par analyse selon le nombre de fois, et de réglage automatique de paramètres de fonctionnement de caméra selon le scénario de mouvement (S103) ;
comprenant en outre, avant l'étape A :
A0. le préétablissement de relations de correspondance entre tous les scénarios de mouvement et des paramètres de fonctionnement de caméra, lesdits scénarios de mouvement incluant un scénario de marche à pied, un scénario de vélo, un scénario de véhicule automobile, un scénario d'inclinaison et un scénario d'immobilité ; et
dans lequel l'au moins une valeur prédéterminée comprend une première valeur seuil, une deuxième valeur seuil, une troisième valeur seuil, et une quatrième valeur seuil, la quatrième valeur seuil > la troisième valeur seuil > la deuxième valeur seuil > la première valeur seuil, et
dans lequel l'étape B comprend en particulier :
- l'acquisition du nombre de fois où la valeur maximale des données de mouvement est entre la première valeur seuil et la deuxième valeur seuil, entre la deuxième valeur seuil et la troisième valeur seuil, entre la troisième valeur seuil et la quatrième valeur seuil, et plus grande que la quatrième valeur seuil.

2. Le procédé permettant à une caméra de terminal mobile de s'adapter automatiquement à des scénarios selon la revendication précédente, dans lequel l'étape C comprend en particulier :
C1. la détermination quant à savoir si le nombre de fois où la valeur maximale est plus grande que la quatrième valeur seuil est plus grand qu'une valeur standard du scénario de marche à pied (S201), si oui, la détermination du fait que le terminal mobile est actuellement en scénario de marche à pied (S202), et si non, le passage à l'étape C2 ;
C2. la détermination quant à savoir si le nombre de fois où la valeur maximale est entre la troisième valeur seuil et la quatrième valeur seuil est plus grand qu'une valeur standard du scénario de vélo (S203), si oui, la détermination du fait que le terminal mobile est actuellement en scénario de vélo (S204), et si non, le passage à l'étape C3 ;
C3. la détermination quant à savoir si le nombre de fois où la valeur maximale est entre la deuxième valeur seuil et la troisième valeur seuil est plus grand qu'une valeur standard du scénario de véhicule automobile (S205), si oui, la détermination du fait que le terminal mobile est actuellement en scénario de véhicule automobile (S206), et si non, le passage à l'étape C4 ;
C4. la détermination quant à savoir si le nombre de fois où la valeur maximale est entre la première valeur seuil et la deuxième valeur seuil est plus grand qu'une valeur standard du scénario d'inclinaison (S207), si oui, la détermination du fait que le terminal mobile est actuellement en scénario d'inclinaison (S208), et si non, la détermination du fait que le terminal mobile est actuellement en scénario d'immobilité (S209).

3. Le procédé permettant à une caméra de terminal mobile de s'adapter automatiquement à des scénarios selon n'importe lesquelles des revendications précédentes, dans lequel la caméra comprend en outre : un mode portrait, un mode paysage, un mode sport, un mode nuit, un mode coucher de soleil et un mode anti-secousses.

4. Le procédé permettant à une caméra de terminal mobile de s'adapter automatiquement à des scénarios selon n'importe lesquelles des revendications précédentes,
dans lequel l'étape C comprend en particulier :
- le réglage de paramètres de fonctionnement de caméra actuels à des paramètres de fonctionnement correspondant au mode de fonctionnement actuel du terminal mobile selon le scénario de mouvement actuel du terminal mobile obtenu par analyse et des relations de correspondance préétablies entre tous les scénarios de mouvement et des paramètres de fonctionnement de caméra.

5. Un système permettant à une caméra de terminal mobile de s'adapter automatiquement à des scénarios, le système comprenant :
- un module de collecte de données (100) pour la collecte de valeurs d'accélération d'un terminal mobile dans les limites d'une période de temps prédéterminée par l'intermédiaire d'un capteur d'accélération ;
- un module d'analyse de données (200) pour l'acquisition du nombre de fois où la valeur maximale des valeurs d'accélération dépasse au moins une valeur prédéterminée ;
- un module de réglage automatique (300) pour l'obtention du scénario de mouvement actuel par analyse selon le nombre de fois, et le réglage automatique des paramètres de fonctionnement de caméra selon le scénario de mouvement ;
- un module de préétablissement pour le préétablissement de relations de correspondance entre tous les scénarios de mouvement et des paramètres de fonctionnement de caméra, lesdits scénarios de mouvement incluant un scénario de marche à pied, un scénario de vélo, un scénario de véhicule automobile, un scénario d'inclinaison et un scénario d'immobilité ;
- dans lequel l'au moins une valeur prédéterminée comprend une première valeur seuil, une deuxième valeur seuil, une troisième valeur seuil, et une quatrième valeur seuil, la quatrième valeur seuil > la troisième valeur seuil > la deuxième valeur seuil > la première valeur seuil, et le module d'analyse de données comprend en particulier :
- une unité d'acquisition de compte pour l'acquisition du nombre de fois où la valeur maximale des données de mouvement est entre la première valeur seuil et la deuxième valeur seuil, entre la deuxième valeur seuil et la troisième valeur seuil, entre la troisième valeur seuil et la quatrième valeur seuil, et plus grande que la quatrième valeur seuil.

6. Le système permettant à une caméra de terminal mobile de s'adapter automatiquement à des scénarios selon la revendication 5, dans lequel le module de réglage automatique comprend :
- une première unité de détermination pour la détermination quant à savoir si le nombre de fois où la valeur maximale est plus grande que la quatrième valeur seuil est plus grand que la valeur standard du scénario de marche à pied, si oui, la détermination du fait que le terminal mobile est actuellement en scénario de marche à pied, et si non, le passage à la deuxième unité de détermination ;
- une deuxième unité de détermination pour la détermination quant à savoir si le nombre de fois où la valeur maximale est entre la troisième valeur seuil et la quatrième valeur seuil est plus grand que la valeur standard du scénario de vélo, si oui, la détermination du fait que le terminal mobile est actuellement en scénario de vélo, et si non, le passage à la troisième unité de détermination ;
- une troisième unité de détermination pour la détermination quant à savoir si le nombre de fois où la valeur maximale est entre la deuxième valeur seuil et la troisième valeur seuil est plus grand que la valeur standard du scénario de véhicule automobile, si oui, la détermination du fait que le terminal mobile est actuellement en scénario de véhicule automobile, et si non, le passage à la quatrième unité de détermination ;
- une quatrième unité de détermination pour la détermination quant à savoir si le nombre de fois où la valeur maximale est entre la première valeur seuil et la deuxième valeur seuil est plus grand que la valeur standard du scénario d'inclinaison, si oui, la détermination du fait que le terminal mobile est actuellement en scénario d'inclinaison, et si non, la détermination du fait que le terminal mobile est actuellement en scénario d'immobilité.
